# EUROPÄISCHE PATENTANMELDUNG

(11) **EP 0 581 125 A1**
(43) Veröffentlichungstag der Anmeldung: **02.02.1994**
(21) Anmeldenummer: 93111341.9
(22) Anmeldetag: 15.07.1993
(51) Int. Cl.: B23F 21/02, B23F 1/02

(54) **Formschleifwerkzeug für die Bearbeitung von Zahnrädern**

(30) Priorität: 25.07.1992 DE 4224703
(71) Anmelder: Kapp GmbH & Co. KG Werkzeugmaschinenfabrik, D-96450 Coburg (DE)
(72) Erfinder: Pickert, Werner, Dipl.-Ing. (FH), D-96450 Coburg (DE)

(57) **Zusammenfassung**

Das Formschleifwerkzeug ist so gestaltet, daß mindestens zwei benachbarte Zahnlücken gleichzeitig geschliffen werden. Das Werkzeug (2) in Form eines Schleifscheibensatzes (3-7) ist so gestaltet, daß es mindestens zwei Stellen zwischen Werkstück (1) und Werkzeug (2) gibt, die von der Werkzeugform her so zurückgesetzt sind, daß dort gar kein oder nur ein vermindertes Aufmaß abgetragen wird. Dadurch wird erreicht, daß das bezogene Zeitspanvolumen in den kritischen Bereichen den zulässigen Wert nicht übersteigt und mit hohen Zustellungen und Vorschüben gearbeitet werden kann.

## Beschreibung

Die Erfindung betrifft ein Formschleifwerkzeug für die Bearbeitung von Zahnrädern, das mindestens zwei benachbarte Zahnlücken gleichzeitig bearbeitet.

Bei der Großserienfertigung von Zahnrädern, insbesondere in der Pkw-Industrie, ist es Ziel, Zahnräder mit möglichst hoher Qualität in kürzestmöglicher Zeit herzustellen. Üblicherweise werden die Zahnräder nach dem Wälzfräsen oder Wälzstoßen gehärtet und dann einer Hartbearbeitung unterzogen. Hierfür eignet sich das Schleifen besonders gut.

Beim Schleifen wird ein Aufmaß, das sich einerseits aus der Vorbearbeitung vor dem Härten und andererseits aus Härteverzügen oder aber aus einer ungenauen Positionierung des vorprofilierten Werkstücks in der Schleifmaschine ergibt, abgetragen. Der Schleifvorgang erzeugt durch das Abtragen dieses Aufmaßes die endgültige Geometrie, für die teilweise Formabweichungen von nur wenigen Mikrometern zulässig sind. Die Forderung nach möglichst kurzen Bearbeitungszeiten bedingt die Verwendung großer Zustellungen und hoher Vorschübe, um auf möglichst kurze Werkstückzeiten zu kommen.

Es hat sich herausgestellt, daß das am besten geeignete Maß für die Effizienz der Schleifbearbeitung das sogenannte bezogene Zeitspanvolumen Q'_{w} ist, das heißt, die Anzahl der abgeschliffenen Kubikmillimeter Aufmaß pro Sekunde Schleifzeit und pro Millimeter Schleifscheibenbreite.

Bei Plan- oder Rundbearbeitungsschleifaufgaben ergibt sich das bezogene Zeitspanvolumen als Produkt aus der Zustellung (Aufmaß) c in Millimetern und dem Vorschub u in Millimeter pro Sekunde.

Werden keine ebenen Flächen geschliffen, sondern beispielsweise Zahnlücken einer Evolventenverzahnung, ist das jeweils aktuelle bezogene Zeitspanvolumen abhängig von der Stelle, an der sich Schleifwerkzeug und Werkstück berühren: Nur an der tiefsten Stelle eines geschliffenen Zahngrundes oder der höchsten Stelle eines geschliffenen Zahnkopfes steht die Oberflächennormale senkrecht zur Drehachse der Schleifscheibe; hier liegen bezüglich des bezogenen Zeitspanvolumens dieselben Verhältnisse vor, wie beim Plan- oder Rundschleifen. Entlang der Evolvente ergeben sich durch die Geometrie jedoch höhere Werte für das bezogene Zeitspanvolumen, weil dann das Produkt aus Aufmaß und Vorschub noch durch den Sinus des Winkels dividiert werden muß, der von der Oberflächennormale und der Schleifscheibendrehachse eingeschlossen wird.

Um beim Verzahnungsschleifen mittels Formschleifverfahren die Bearbeitungszeiten zu verkürzen, hat sich die Verwendung einer sogenannten Satzscheibe bewährt. Hier sind mehrere Schleifscheiben nebeneinander angeordnet und schleifen mehrere benachbarte Zahnlücken simultan. Eine beispielsweise fünfrillige Schleifscheibe bearbeitet auf diese Weise fünf nebeneinander liegende Zahnlücken gleichzeitig; das Weiterteilen nach Fertigstellung der soeben geschliffenen Zahnlücken erfolgt dann um fünf Zahnlücken, also in Fünferschritten, wodurch sich eine entsprechende Reduzierung der Bearbeitungszeit ergibt. Die Maximalzahl nebeneinander angeordneter Schleifscheiben ergibt sich aus der Geometrie des Zahnrades dadurch, daß Hinterschnitt vermieden werden muß (Firmenschrift der Fa. KAPP GmbH, Coburg, "Außenverzahnungs-Schleifmaschine VAS-5").

Aus der Praxis sind Werte für das zulässige bezogene Zeitspanvolumen beim Schleifen bekannt. Werden diese Werte z. B. durch zu hohen Vorschub oder durch ein zu hohes Aufmaß überschritten, besteht die Gefahr der Werkstückschädigung durch Schleifbrand. Dabei entstehen lokal derart hohe Temperaturen, daß es zu einer metallurgischen Veränderung am Werkstück kommt. Gemäß den obigen Ausführungen ergibt sich, daß das bezogene Zeitspanvolumen bei der Verwendung von Satzscheiben in dem Maße steigt, je geringer der Winkel zwischen Oberflächennormale und Schleifscheibendrehachse wird. Im Extremfall - wenn gerade die Grenze zum Hinterschnitt an den äußersten Schleifscheiben des Schleifscheibensatzes erreicht ist - geht das bezogene Zeitspanvolumen wegen Division durch Null (Winkel zwischen Oberflächennormale und Schleifscheibendrehachse ist Null) gegen Unendlich. Aber auch schon vor Erreichen dieser Grenze ergeben sich sehr hohe Werte für das bezogene Zeitspanvolumen, was in der Praxis dadurch bestätigt wird, daß die durch die äußersten Schleifscheiben eines Schleifscheibensatzes geschliffenen Zahnlücken schleifbrandgefährdet sind.

Der Erfindung liegt die **Aufgabe** zugrunde, ein Formschleifwerkzeug für die Bearbeitung von Zahnrädern, das mindestens zwei benachbarte Zahnlücken gleichzeitig bearbeitet, zu schaffen, das die vorstehend genannten Nachteile vermeidet, also Zahnräder ohne Gefahr einer Schleifbrandschädigung bearbeitet, und dabei trotzdem Zeitvorteile durch die Verwendung von Werkzeugsätzen schlägt.

Die **Lösung** dieser Aufgabe durch die Erfindung ist dadurch gekennzeichnet, daß die Arbeitsflächen des Werkzeuges so ausgebildet sind, daß es an allen denjenigen Kontaktstellen zwischen Werkzeug und Werkstück, an denen der Winkel α zwischen der Oberflächennormalen der Zahnflanke und der Schleifwerkzeugdrehachse einen bezüglich der Schleifbrandgefahr kritischen Wert unterschreitet, nur ein vermindertes oder gar kein Aufmaß abträgt.

Die Arbeitsfläche des Formschleifwerkzeugs ist so ausgebildet, daß keine oder nur eine geringere Zerspanung an denjenigen Stellen der äußeren Satzscheiben stattfindet, die - infolge ihres geringen Winkels zwischen Oberflächennormale und Schleifscheibendrehachse - besonders schleifbrandgefährdet sind. Die für die entsprechende Lücke vorgesehene Schleifscheibe bearbeitet infolgedessen nicht die ganze, sondern nur einen Teil, im wesentlichen die Hälfte, der Lücke. Dadurch kann jetzt natürlich keine Weiterteilung um soviele Zahnlücken erfolgen, wie es der Anzahl der verwendeten Satzscheiben entspräche. Vielmehr erfolgt das Weiterteilen um eine kleinere Anzahl von Zahnlücken als es der Anzahl der verwendeten Satzscheiben entspricht. Jetzt werden im nächsten Schleifhub (nach dem Weiterteilen) durch die sich am anderen Ende des Schleifsatzes befindenden Schleifscheiben die zuvor nur zur Hälfte geschliffenen Zahnlücken fertigbearbeitet. Der zunächst vermeintliche Zeitverlust durch die Überlappungen beim Weiterteilen wird dadurch mehr als wettgemacht, daß nunmehr mit wesentlich höheren Vorschüben gearbeitet werden kann, ohne Gefahr einer Schleifbrandschädigung durch ein zu hohes bezogenes Zeitspanvolumen zu laufen.

Gemäß einem weiteren Merkmal der Erfindung sind die Arbeitsflächen des Werkzeugs so ausgebildet, daß sich bei vorgegebenem konstanten Werkstückaufmaß und Werkzeugvorschub an möglichst vielen gleichzeitig bearbeiteten Zahnflanken über die gesamte Evolvente ein gleiches bezogenes Zeitspanvolumen ergibt. Die Zurücknahme des Schleifwerkzeugprofils in den kritischen, schleifbrandgefährdeten Zahnlücken erfolgt also nicht über die gesamte Höhe des Zahnes um einen konstanten Betrag; vielmehr wird die Auslegung der kritischen Stellen des Werkzeugs so vorgenommen, daß sich unter Berücksichtigung des jeweiligen Winkels zwischen Oberflächennormale und Schleifscheibendrehachse ein gleichbleibender Wert für das bezogene Zeitspanvolumen ergibt. Dies führt zum optimalen Nutzen der Leistungsfähigkeit der Schleifscheibe.

In der Zeichnung ist ein Ausführungsbeispiel des erfindungsgemäßen Werkzeugs dargestellt.

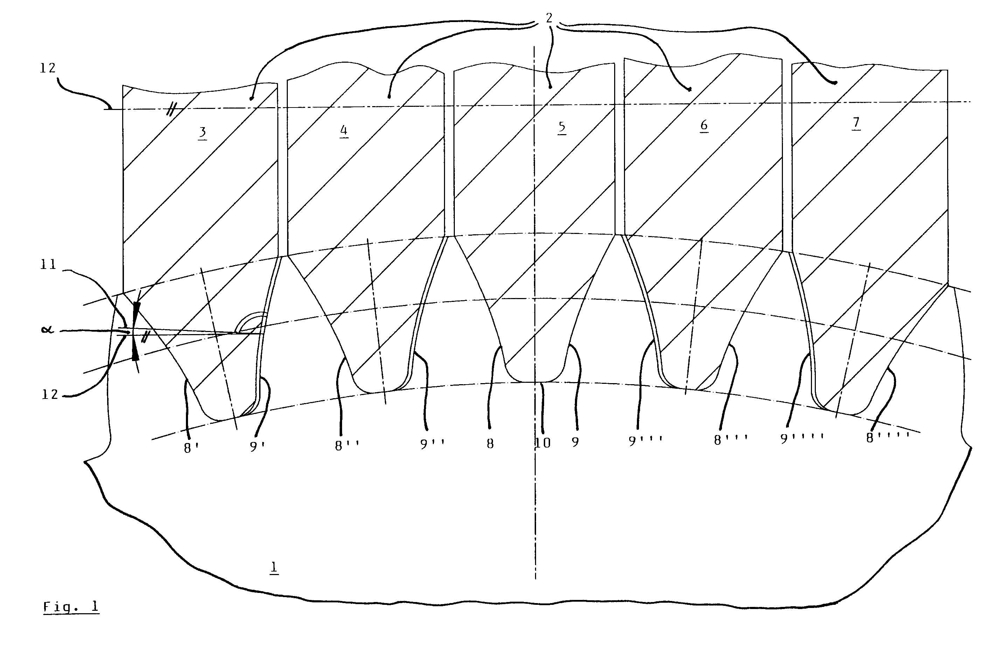

Die Zeichnung zeigt
in Fig. 1 einen Ausschnitt aus dem Stirnschnitt eines zu bearbeitenden Zahnrades und das zugehörige Schleifwerkzeug in Form einer Satzscheibe
und in Fig. 2 denselben Ausschnitt zusammen mit den angrenzenden Zähnen des zu schleifenden Werkstücks.

Das zu bearbeitende Zahnrad 1 wird durch Schleifen im Formschleifverfahren hartbearbeitet. Hierzu wird eine Satzscheibe 2 eingesetzt, die hier aus fünf nebeneinander angeordneten Einzelscheiben besteht.

Die Einzelscheibe 5 sitzt symmetrisch und bearbeitet ihre jeweilige Zahnlücke im klassischen Vollformverfahren, d. h. beide Evolventenflanken 8 und 9 sowie der Zahnfuß 10 werden gleichzeitig geschliffen. Die Einzelscheiben 3 und 4 sowie 6 und 7 sind nicht symmetrisch ausgebildet, sondern gemäß der für sie relevanten Evolventenform, die sich aus der Verschiebung aus der Symmetrielinie heraus ergibt. Diese Scheiben sind jedoch so ausgebildet, daß sie jeweils nur eine der beiden Evolventenzahnflanken berühren, nämlich 8', 8'', 8''' und 8''''. Die jeweils gegenüberliegenden Evolventenzahnflanken 9', 9'', 9''' und 9'''' haben keinen Kontakt zur Schleifscheibe und werden daher nicht bearbeitet. Gerade diese Zahnflanken sind es aber, die durch ihren kleinen Winkel α zwischen Oberflächennormale 11 und Schleifscheibendrehachse 12 schleifbrandgefährdet sind.

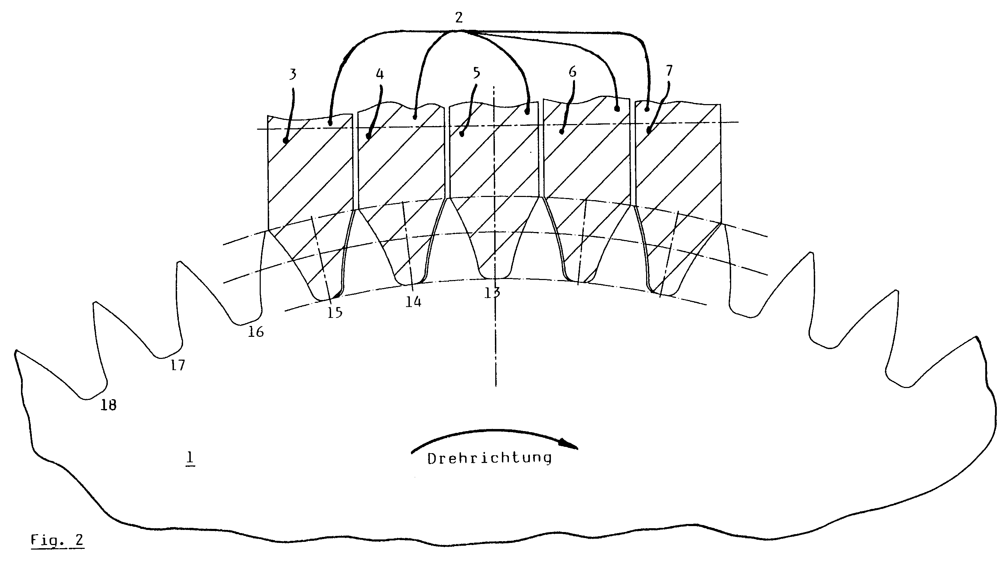

Sind die fünf nebeneinanderliegenden Zahnlücken mit der Satzscheibe, vorzugsweise im Einzel- oder im Doppelhub, bearbeitet worden, sind die Zahnflanken 8', 8'', 8, 9, 8''' und 8'''' fertigbearbeitet. Hingegen sind die Zahnflanken 9', 9'', 9''' und 9'''' noch unbearbeitet. Daher wird jetzt die fünfrillige Satzscheibe 2 außer Eingriff gefahren und das Zahnrad 1 um seine Drehachse um drei Zahnteilungen weitergedreht (s. Fig. 2). Dadurch kommt die - fertiggeschliffene - Zahnlücke 13 außer Eingriff, Zahnlücke 14 kommt in Position für die Bearbeitung durch die Einzelscheibe 7 und analog die Zahnlücken 15, 16, 17 bzw. 18 in Position für die Bearbeitung durch die Einzelscheiben 6, 5, 4 bzw. 3.

Während nun Zahnlücke 16 durch die Einzelscheibe 5 komplett bearbeitet wird, werden durch die Einzelscheiben 6 bzw. 7 die noch nicht geschliffenen Zahnflanken der Zahnlücken 15 bzw. 14 bearbeitet. Von den Zahnflanken 18 bzw. 17 werden durch die Einzelscheiben 3 bzw. 4 jeweils nur die linken Zahnflanken geschliffen; erst nach Weiterteilen um weitere drei Zahnlücken werden diese Zahnlücken durch die Einzelscheiben 6 bzw. 7 fertigbearbeitet.

## Patentansprüche

1. Formschleifwerkzeug für die Bearbeitung von Zahnrädern, das mindestens zwei benachbarte Zahnlücken gleichzeitig bearbeitet,
**dadurch gekennzeichnet**,
daß die Arbeitsflächen des Werkzeugs so ausgebildet sind, daß es an allen denjenigen Kontaktstellen zwischen Werkzeug und Werkstück, an denen der Winkel α zwischen der Oberflächennormalen der Zahnflanke und der Schleifwerkzeugdrehachse einen bezüglich der Schleifbrandgefahr kritischen Wert unterschreitet, nur ein vermindertes oder gar kein Aufmaß abträgt.

2. Formschleifwerkzeug nach Anspruch 1, dadurch gekennzeichnet, daß die Arbeitsflächen des Werkzeugs so ausgebildet sind, daß sich bei vorgegebenem konstantem Werkstückaufmaß und Werkzeugvorschub an möglichst vielen gleichzeitig bearbeiteten Zahnflanken über die gesamte zu bearbeitende Evolvente ein gleiches bezogenes Zeitspanvolumen ergibt.
